# EUROPÄISCHE PATENTSCHRIFT

(11) **EP 0 460 126 B1**
(45) Veröffentlichungstag und Bekanntmachung des Hinweises auf die Patenterteilung: **27.07.1994**
(21) Anmeldenummer: 90916036.8
(22) Anmeldetag: 09.11.1990
(51) Int. Cl.: B60K 28/16

(54) **SYSTEM ZUR ELEKTRONISCHEN STEUERUNG UND/ODER REGELUNG DER LEISTUNG EINER BRENNKRAFTMASCHINE EINES KRAFTFAHRZEUGS**
SYSTEM FOR THE ELECTRONIC CONTROL AND/OR REGULATION OF THE POWER OF AN INTERNAL COMBUSTION ENGINE OF A MOTOR VEHICLE
SYSTEME POUR LA COMMANDE ELECTRONIQUE ET/OU LA REGULATION DE LA PUISSANCE D'UN MOTEUR A COMBUSTION INTERNE D'UN VEHICULE AUTOMOBILE

(30) Priorität: 09.12.1989 DE 3940751
(43) Veröffentlichungstag der Anmeldung: 11.12.1991
(73) Patentinhaber: ROBERT BOSCH GMBH, 70442 Stuttgart (DE)
(72) Erfinder: SCHMITT, Johannes, D-7145 Markgröningen (DE); KNOSS, Martin, D-7144 Asperg (DE); LOEHR, Diethard, D-7141 Schwieberdingen (DE)
(86) Internationale Anmeldenummer: DE9000850
(87) Internationale Veröffentlichungsnummer: WO9108922

(56) Entgegenhaltungen:
- EP-A- 0 230 745
- EP-A- 0 339 603
- Patent Abstracts of Japan, Band 10, Nr. 270 (M-517)(2326), 13. September 1986
- Patent Abstracts of Japan, Band 12, Nr. 241 (M-716) (3088), 8. Juli 1988

## Beschreibung

### Stand der Technik

Die Erfindung betrifft ein System zur elektronischen Steuerung und/oder Regelung der Leistung einer Brennkraftmaschine gemäß dem Oberbegriff des Patentanspruchs 1.

Ein derartiges System ist aus der DE-A-37 43 471 bekannt. Dort wird zur Steuerung und/oder Regelung der Leistung der Brennkraftmaschine ein System vorgeschlagen, welches in bestimmten Betriebszuständen, die im wesentlichen durch auftretenden übermäßigen Schlupf an einem der Antriebsräder gekennzeichnet sind, die Leistung der Brennkraftmaschine reduziert. Dabei wird die außerhalb des beschriebenen Betriebszustandes in Abhängigkeit des Fahrerwunsches gesteuerte Drosselklappe unabhängig von diesem im Sinne einer Leistungsreduzierung angesteuert, d. h. um einen vorgegebenen Winkel in Richtung ihrer geschlossenen Stellung zurückgeführt und anschließend stufenförmig bis zum erneuten Erreichen einer Schlupfschwelle der Antriebsräder im Sinne einer Leistungszunahme verändert.

In der DE-A-21 39 230 wird ein System zur Beeinflussung des Motordrehmoments vorgeschlagen, wobei im Schubbetrieb bei auftretendem übermäßigem Radschlupf die Betriebsmittelzufuhr zur Brennkraftmaschine zur Reduzierung des Motorbremsmomentes erhöht wird (Motorschleppmomentregelung MSR). Erfolgt die Steuerung über eine Drosselklappe, so bedeutet dies, daß die Drosselklappe geöffnet wird Dies führt prinzipiell im Schub zu einer Reduzierung der Leistung der Brennkraftmaschine.

Im folgenden wird daher nur von Leistungsreduzierung gesprochen. Im ASR-Fall führt dies zu einer Verminderung der Betriebsmittelzufuhr (Drosselklappe wird in Richtung ihrer geschlossenen Stellung bewegt), im MSR-Fall zu einer Erhöhung (Drosselklappe wird geöffnet).

Werden derartige Systeme im Zusammenspiel mit einer elektronischen Motorleistungssteuerung betrieben, treten Nachteile in der Reaktionsgeschwindigkeit des Regelsystems der elektronischen Motorleistungssteuerung auf.

Die EP-A 104 539 beschreibt eine Vorrichtung zur Reduzierung des Bremsmoments von Brennkraftmaschinen im Schubbetrieb. Dabei wird im Schubbetrieb des Kraftfahrzeugs zur Reduzierung des Bremsmoments der Brennkraftmaschine die Betriebsmittelzufuhr erhöht, d. h. die Stellung der Drosselklappe wird im Sinne einer Erhöhung der Luftzufuhr verändert.

Aus der EP-A-230 745 ist ein Steuersystem für eine Brennkraftmaschine bekannt, bei welchem abhängig vom Fahrerwunsch die Umdrehungsgeschwindigkeit der angetriebenen Räder geregelt wird. Bei erkanntem übermäßigem Schlupf der Antriebsräder wird ein die Motorleistung beeinflussendes Stellglied unabhängig vom Fahrerwunsch entsprechend einem vom Schlupf abhängigen Sollwert eingestellt und anschließend langsam wieder auf dem vom Fahrer vorgegebenen Wert geführt wird. Maßnahmen zur Verbesserung des Ansprechverhaltens des Systems werden nicht beschrieben.

Der Erfindung liegt daher die Aufgabe zugrunde, die Reaktionsgeschwindigkeit eines derartigen Steuersystems auf eine Leistungsreduzierungsforderung zu verbessern.

Diese Aufgabe wird durch die Merkmale des Patentanspruchs 1 gelöst.

### Vorteile der Erfindung

Die erfindungsgemäße Vorgehensweise hat den Vorteil, im Zusammenspiel einer elektronischen Motorleistungssteuerung (EMS) mit einer Antriebsschlupf- bzw. Motorschleppmomentregelung (ASR bzw. MSR) die Reaktionsfähigkeit des Systems auf eine Leistungsreduzierungsforderung zu verbessern, ohne einen Eingriff in die Struktur des Regelsystems der elektronischen Motorleistungssteuerung vornehmen zu müssen. Die Struktur des die Leistung der Brennkraftmaschine regelnden Regelkreises kann somit in ihrer im Hinblick auf die Leistungsregelung, Leerlaufregelung oder Nachlaufsteuerung usw. gewählten Form bleiben, die Reaktionszeit der Leistungsänderung auf eine Leistungsreduzierungsforderung erfolgt jedoch mit der für eine Antriebsschlupfregelung bzw. Motorschleppmomentregelung notwendigen Dynamik.

Weitere Vorteile der Erfindung ergeben sich in Verbindung mit den Unteransprüchen aus der nachfolgenden Beschreibung eines Ausführungsbeispiels.

### Zeichnung

Die Erfindung wird nachstehend anhand des in der Zeichnung dargestellten Ausführungsbeispiels erläutert. Dabei zeigt Figur 1 zur Übersicht ein Blockschaltbild eines Systems zur elektronischen Steuerung und/oder Regelung der Leistung einer Brennkraftmaschine, in dem die anhand Figur 2 und in detaillierterer Beschreibung in Figur 3 als Flußdiagramm beschriebenen erfindungsgemäßen Vorgehensweise zur Wirkung kommt. Figur 4 zeigt abschließend die zeitlichen Verläufe der auftretenden Signale.

### Beschreibung eines Ausführungsbeispiels

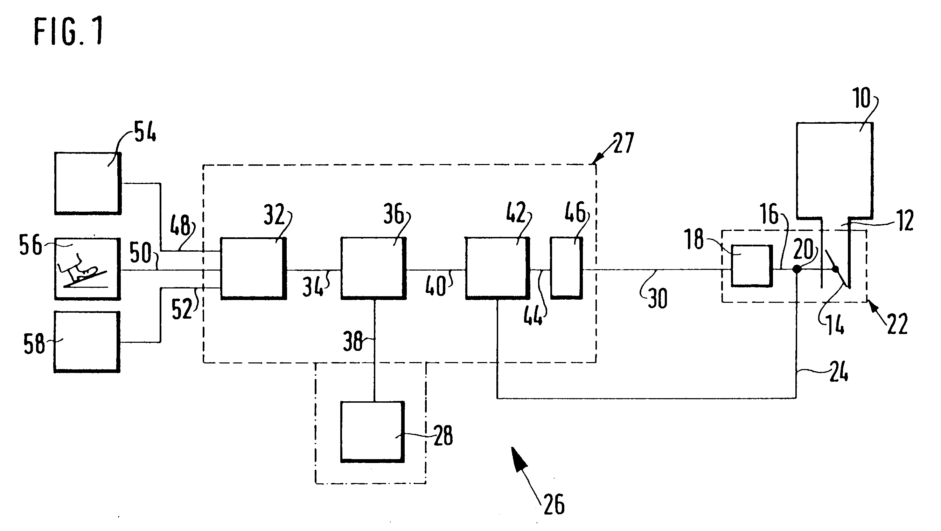

Figur 1 zeigt eine Brennkraftmaschine 10 mit einer im Ansaugsystem 12 der Brennkraftmaschine 10 angeordneten Drosselklappe 14 zur Steuerung der Luftzufuhr zur Brennkraftmaschine bzw. der Leistung der Brennkraftmaschine. Die Drosselklappe 14 ist über eine starre Verbindung 16 mit einem elektrisch betätigbaren Stellmotor 18 verbunden. Drosselklappe 14, starre Verbindung 16 und Stellmotor 18 bilden zusammen mit einem Positionsgeber 20 das Leistungsstellglied 22 der Brennkraftmaschine. Der Positionsgeber 20, der im Ausführungsbeispiel nach Figur 1 beispielhaft an der starren Verbindung 16 angeordnet ist, gibt über seine Ausgangsleitung 24 ein der Position des Leistungsstellgliedes 22 entsprechendes Signal an ein Motorsteuerungssystem 26 ab.

Das aus der strichliert dargestellten elektronischen Motorleistungssteuerung 27 und einer strichpunktiert umrandeteten ASR- und/oder MSR-Einrichtung 28 bestehende Motorsteuerungssystem 26 ist mit dem Stellglied 22 über eine Ansteuerleitung 30, die auf den Stellmotor 18 geführt ist, verbunden. Der strichliert umfaßte Teil des Motorsteuerungssystems 26 besteht aus einer Einheit 32 zur Bildung eines Vorgabewertes für die Stellgliedposition, die über eine Verbindungsleitung 34 mit einer Einheit 36 zur Verarbeitung des ASR-/MSR-Signals verknüpft ist. Die Einheit 36 ist ferner mit einer zweiten Verbindungsleitung 38 mit der ASR-/MSR-Einrichtung 28 verbunden. Ihre Ausgangsleitung 40 wird auf einen ersten Eingang des Lagereglers 42 geführt, dessen zweiter Eingang mit der Verbindungsleitung 24 beaufschlagt ist. Der Ausgang 44 des Lagereglers verbindet diesen mit einer Treiberstufe 46, deren Ausgang die Verbindungsleitung 30 darstellt.

Die Einheit 32 zur Bildung des Vorgabewertes ist über ihre Eingangsleitungen 48, 50 und 52 mit weiteren Einrichtungen der Brennkraftmaschine und/oder des Kraftfahrzeugs verbunden. So verbindet die Eingangsleitung 48 die Einheit 32 beispielsweise mit einem Fahrgeschwindigkeitsregler 54, die Eingangsleitung 50 mit einem vom Fahrer betätigbaren Fahrpedal 56. Die symbolisch als Einzelleitung dargestellte Eingangsleitung 52 schließlich verknüpft die Einheit 32 mit Motorsteuerungsfunktionen 58, die Einfluß auf die Stellgliedstellung haben. Dabei ist insbesondere an eine Klopfregelung, Geschwindigkeits- und/oder Drehzahlbegrenzung oder einer Katalysatorschutzfunktion gedacht.

Neben der dargestellten Drosselklappensteuerungsfunktion kann das in Figur 1 beschriebene System auf ein die Kraftstoffzufuhr zu einer Dieselbrennkraftmaschine steuerndes Leistungsstellglied angewendet werden.

Die Einheit 32 zur Bildung des Vorgabewertes erzeugt in Abhängigkeit seiner Eingangssignale, die eine vom Fahrer ausgelöste Funktion des Fahrgeschwindigkeitsreglers 54, ein die Stellung des Fahrpedals repräsentierendes Positionssignal oder einen die weiteren, im Block 58 zusammengefaßt dargestellten Motorsteuerungsfunktionen repräsentierenden Signalwert umfassen, einen die den Eingangsgrößen entsprechenden Wert für die Stellung des Stellglieds` den sogenannten Drosselklappenvorgabewert (DKV). Die Bildung des Vorgabewertes berechnet sich dabei beispielsweise aus einem vorgegebenen Kennfeld. Der so gebildete DKV wird über die Leitung 34 an die Einheit 36 abgegeben.

Durch die Einheit 36 wird der ermittelte DKV mit einem über die Leitung 38 von der ASR- und/oder MSR-Einrichtung 28 gelieferten Wert zur Reduzierung der Motorleistung gemäß dem weiter unten dargestellten Verfahren verknüpft. Dabei ist die Erzeugung des Vorgabewertes zur Reduzierung (DKR) bzw. Erhöhung (DKE) der Betriebsmittelzufuhr, die in der Einrichtung 28 stattfindet, beispielweise aus dem eingangs genannten Stand der Technik, DE-OS 37 43 471 (ASR) und der

DE-OS 21 39 230 (MSR), bekannt und wird daher im folgenden nicht näher beschrieben.

Der aus DKV und DKR/DKE gebildete Sollwert (DKS) für die Position des Stellglieds wird über die Leitung 40 von der Einheit 36 an den Lageregler 42 weitergegeben. Dieser vergleicht den berechneten Sollwert mit dem vom Positionsgeber 20 über die Leitung 24 herangeführten Istwert (DKI) der Stellgliedsstellung und gibt über die Leitung 44 und die Treiberstufe 46 ein die Differenz zwischen Soll- und Istwert anzeigendes Ansteuersignal an das Stellglied 22 ab. Das Ansteuersignal wird dabei über Leitung 30 dem Stellmotor 18 zugeführt, der entsprechend dem Ansteuersignal die Position des Stellgliedes 22 verändert, so daß die Differenz zwischen Soll- und Istwert verringert wird.

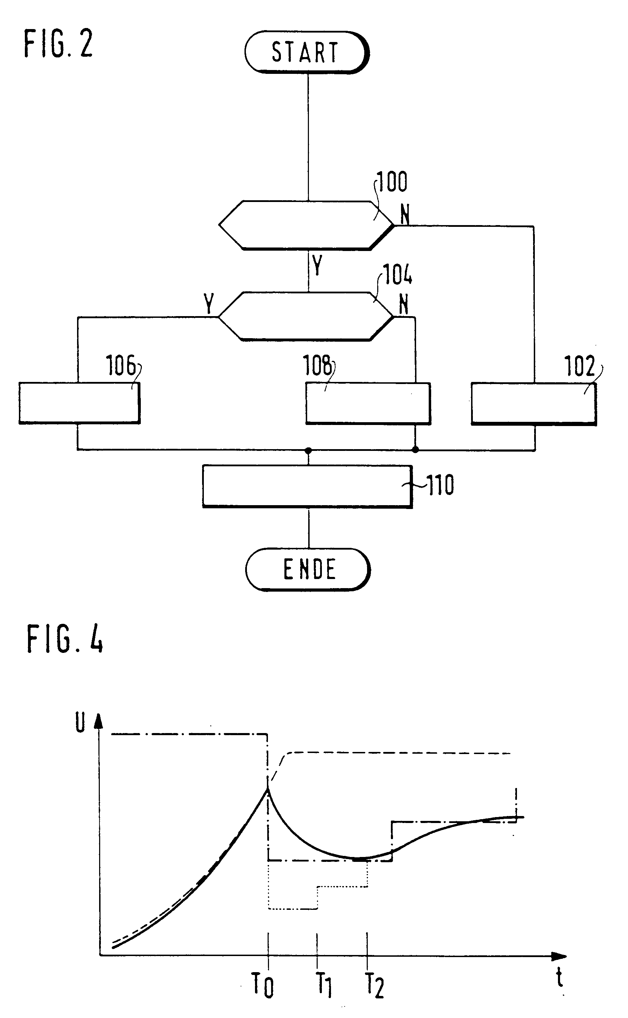

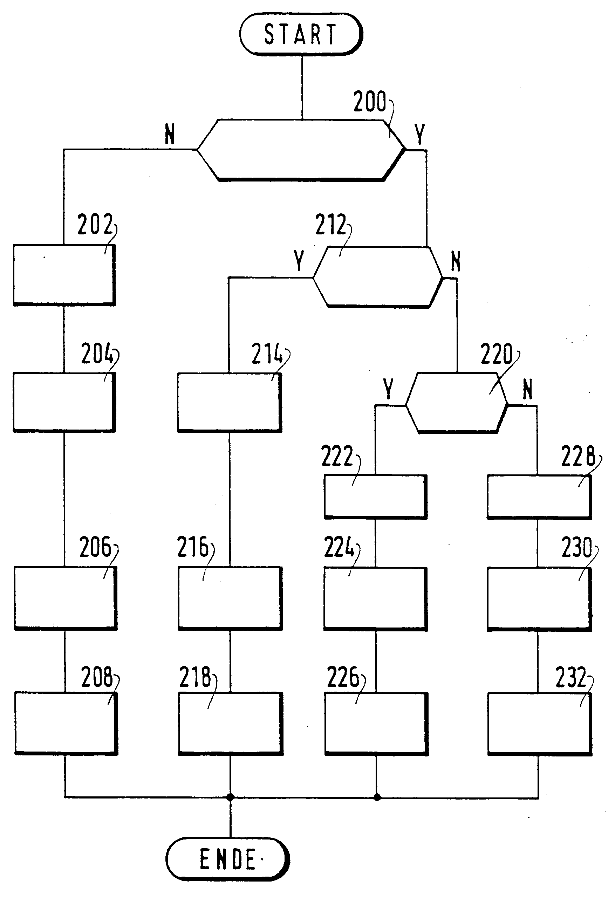

Figur 2 zeigt anhand eines Flußdiagramms den generellen Ablauf der in der Einheit 36 stattfindenden Verknüpfung zwischen Positionsvorgabewert (DKV) und ASR- bzw. MSR-Vorgabewert (DKR/DKE). Nach Start des dargestellten Programmteils des Motorsteuerungssystems zu Beginn eines Betriebszyklus des Kraftfahrzeugs, wird in einem Schritt 100 über eine Durchführung der ASR- bzw. MSR-Funktion entschieden. Dies erfordert wenigstens die Abfrage, ob von der ASR- bzw. MSR-Einrichtung ein Vorgabewert (DKR/DKE) vorliegt, der innerhalb eines vorgegebenen Wertbereichs liegt und, im Falle der ASR, ob der Vorgabewert kleiner als der DKV-Wert der Einheit 32 ist, im Falle der MSR, ob Schubbetrieb erkannt worden ist. Ist dies nicht der Fall, so wird entsprechend Block 102 der von der Einheit 32 berechnete Vorgabewert für die Stellgliedsposition als Sollwert (DKS) an den Lageregler 42 zur Einstellung der entsprechenden Stellgliedposition abgegeben.

Wird im Abfrageblock 100 auf Durchführung der ASR- bzw. MSR-Funktion entschieden, wird entsprechend Block 104 festgestellt ob ein ASR-Eingriff vorliegt und dieser entsprechend Block 106 nach dem in Figur 3 dargestellten Verfahren ausgeführt. Eine entsprechende Vorgehensweise repräsentiert Block 108, der bei einem MSR-Eingriff aktiviert wird. Zum Abschluß des Programmteils wird in Block 110 ein gespeicherter Vorgabewert DKRALT/DKEALT mit dem in diesem Programmdurchlauf vorliegenden Vorgabewert DKR/DKE überschrieben und der Programmteil beendet.

Dem Flußdiagramm nach Figur 2 liegt ein kombiniertes ASR-MSR-System zugrunde. Die erfindungsgemäße Vorgehensweise ist jedoch nicht auf ein solches System beschränkt, sondern ebenfalls auf Systeme, die lediglich über ASR- oder MSR-Funktionen verfügen anzuwenden. In derartigen Fällen entfallen die Blöcke 104 und 108 bzw. 106.

Figur 3 zeigt anhand eines Flußdiagramms ein Ausführungsbeispiel der erfindungsgemäßen Vorgehensweise am Beispiel der ASR-Funktion. Die Ausführung einer MSR-Funktion erfolgt entsprechend, wobei anstelle der Reduzierungsforderung eine Erhöhungsforderung der Betriebsmittelzufuhr tritt.

Nach erfolgter Entscheidung zur Ausführung der Reduzierung bzw. Erhöhung wird der in Figur 3 dargestellte Programmteil gestartet. Dabei wird zunächst in Block 200 die aus dem aktuell anliegenden Vorgabewert (DKR) und dem aus dem vorherigen Programmdurchlauf gespeicherten Vorgabewert (DKRALT) gebildete Differenz auf einen vorgegebenen Wertebereich überprüft. Ist diese Differenz ungleich 0, werden in Block 202 wenigstens zwei vorbestimmte Zeitintervalle bezeichnende Zeitfunktionen zurückgesetzt. Durch diese Überprüfung auf "ungleich 0" führt sowohl eine Zurücknahme als auch eine Erhöhung der Leistungsreduzierungforderung zu der weiter unten beschriebenen dyna- mischen Vorgabeverstärkung. Danach berechnet sich in Block 204 der sogenannte dynamische Vorgabeverstärkungswert DKRDYN als Funktion des Zeitintervalls` dem aus dem vorherigen Programmdurchlauf gespeicherten Vorgabewert (DKRALT), sowie des momentanen Vorgabewertes (DKR). Das jeweilige Zeitintervall wird dabei durch einen Faktor berücksichtigt. Durch DKRDYN werden die von der ASR/MSR-Einrichtung abgegebenen Vorgabewerte in ihrer Wirkung verstärkt. Im Block 204 wird zu Beginn des ASR-Eingriffs der Faktor, der dem ersten, zeitlich früher ablaufendem Zeitintervall T_{d1} zugeordnet ist, angewendet. Dieser dynamische Vorgabeverstärkungswert wird im folgenden in Block 206 gegebenenfalls begrenzt und der dem Lageregler zugeführte Sollwert für die Stellgliedposition auf den momentanen Vorgabewert DKR, vermindert um den dynamischen Vorgabeverstärkungswert DKRDYN, festgesetzt. Die Position des Stellgliedes wird unter Ausführung der Regelung auf die in Block 208 berechnete Sollposition eingeregelt.

Wird im Abfrageschritt 200 festgestellt, daß die Differenz aus gespeichertem und momentanem Vorgabewert gleich Null ist, so wird im Schritt 212 das zweite, zeitlich später ablaufende Zeitintervall T_{d2} dahingehend überprüft, ob dieses bereits abgelaufen ist. Ist dies der Fall, wird der momentan vorliegende Vorgabewert DKR eingelesen (Schritt 214) und gegebenenfalls begrenzt (216). Die Sollposition des Stellgliedes wird im Schritt 218 dann durch den momentan vorliegenden Vorgabewert DKR gebildet.

Ist im gegenteiligen Fall das Zeitintervall T_{d2} nicht abgelaufen, wird im Schritt 220 das zeitlich früher ablaufende, erste Zeitintervall T_{d1} auf seinen Ablauf hin abgefragt. Ist es abgelaufen, d. h. liegt der gegenwärtige Zeitpunkt in dem vorgegebenen Zeitintervall T_{d2}, wird der Vorgabeverstärkungswert aus dem in Block 204 als Funktion des momentanen, des gespeicherten Vorgabewertes DKRALT ermittelten sowie des dem Zeitintervall T_{d2} zugeordneten Faktors berechnet (222) und im Schritt 224 gegebenenfalls begrenzt. Im Schritt 226 wird dann der die Sollposition des Stellgliedes repräsentierende Sollwert als Differenz zwischen momentanen Vorgabewert und dynamischen Vorgabeverstärkungswert festgelegt. Die Regelung führt die Position des Stellgliedes dann auf den im Schritt 226 ermittelten Sollwert hin.

Befindet sich der gegenwärtige Zeitpunkt zu Beginn bzw. während der vorgegebenen Zeitdauer T_{d1} (Block 220), so wird entsprechend Block 204 in Block 228 der dynamische Vorgabeverstärkungswert ermittelt. Nach unter Umständen erfolgter Begrenzung des Vorgabeverstärkungswertes (230) wird die Sollposition des Stellgliedes in Block 232 als Differenz des momentanen Vorgabewertes DKR und des in Block 228 ermittelten dynamischen Vorgabeverstärkungswertes festgelegt. Nach den Blöcken 208/218/226/232 wird der Programmteil beendet und gemäß Fig. 2 weitergeführt.

Die Ermittlung des dynamischen Vorgabeverstärkungswertes als Funktion des momentanen (DKR) und des gespeicherten Vorgabewertes DKRALT, wie er vor einer auftretenden Differenz zwischen DKRALT und DKR (200) vorlag, sowie der Zeit (T_{d1,2}) kann nach einer vorgegebenen Formel oder durch Auslesen einer Tabelle erfolgen. Der dynamische Vorgabeverstärkungswert hängt dabei vorzugsweise von der Differenz zwischen DRKALT und dem momentanen Vorgabewert DKR ab, der während des bestimmten Betriebszustandes von der ASR-/MSR-Einrichtung abgegeben wird. Diese Differenz wird mit einem vorgegebenen Faktor gewichtet, der die verschiedenen Zeitintervalle berücksichtigt. Dabei wird der Faktor vorzugsweise derart gewählt, daß er wahrend des zeitlich früher ablaufenden Zeitintervalls T_{d1} einen hohen Wert annimmt, während des zeitlich später ablaufenden Zeitintervalls T_{d2} einen niedrigeren Wert annimmt. Dadurch ergibt sich ein stufenförmiger Verlauf des die Sollposition des Stellgliedes bestimmenden Sollwerts. Die beiden Zeitintervalle T_{d1} und T_{d2} sind dabei ein vorgegebenes Vielfaches der Programmdurchlaufzeit. Der erfindungsgemäße Gedanke ist dabei keinesfalls auf nur zwei Zeitintervalle beschränkt, selbstverständlich können mehrere dieser Zeitintervalle vorgesehen werden, was zu einem mehrstufigen Verlauf führt.

Figur 4 verdeutlicht anhand eines Zeitverlaufes der auftretenden Signale das erfindungsgemäße Verfahren und seine Auswirkungen auf die Position des Stellgliedes und damit der Motorleistung am Beispiel eines ASR-Eingriffs. Für den MSR-Fall ergeben sich analoge Verhältnisse, wobei der dynamische Vorgabewert zum Vorgabewert der MSR-Einrichtung (DKE) hinzugefügt wird. In Figur 4 bedeutet der gestrichelt gezeichnete Signalverlauf den in Abhängigkeit des Fahrpedals ermittelten Vorgabewert (DKV) für die Position des Stellgliedes. Die durchgezogene Signallinie repräsentiert die jeweilige Position des Stellgliedes (DKI), während die strichpunktiert dargestellte Linie den Signalverlauf des die Motorleistung reduzierenden Vorgabewertes (DKR), der von der ASR-Einrichtung abgegeben wird, repräsentiert. Der punktiert dargestellte Verlauf entspricht dem aufgrund des erfindungsgemäßen Verfahrens unter Berücksichtigung des dynamischen Vorgabeverstärkungswertes (DKRDYN) ermittelten Verlauf des die Leistung reduzierenden Vorgabewertes. Die horizontale Achse stellt dabei eine Zeitachse dar, während die vertikale Achse einen die angesprochenen Werte repräsentierenden Parameter anzeigt.

Figur 4 zeigt in einem Zeitbereich unterhalb der Zeit T0 einen Beschleunigungsvorgang, der durch ständige Zunahme des Vorgabewertes (DKV) und damit der momentanen Position des Stellgliedes gekennzeichnet ist. Da im ASR-Fall zu diesem Zeitpunkt keine Durchdrehneigung der Antriebsräder zeigt, ist der von der ASR-Einrichtung erzeugte Vorgabewert auf einen statischen Pegel DKRALT festgelegt. Zum Zeitpunkt T0 wird eine Durchdrehneigung der Antriebsräder festgestellt. Entsprechend der Funktionsweise der ASR-Einrichtung wird ein die Motorleistung reduzierender Vorgabewert ermittelt und an die Motorleistungssteuerung abgegeben. Diese Funktion ist in Figur 4 durch den sprungförmigen Verlauf der strichpunktiert dargestellten Linie zum Zeitpunkt T0 dargestellt. Der beispielsweise die Fahrpedalstellung repräsentierende Vorgabewert wird dabei unverändert weitergeführt. Der strichpunktiert dargestellte Verlauf des von der ASR-Einrichtung abgegebenen Vorgabewertes wird dabei entsprechend des eingangs genannten Stands der Technik nach der DE-OS 37 43 471 stufenförmig auf seinen Wert, den er vor dem Zeitpunkt T0 eingenommen hat, herangeführt. Das erfindungsgemäße Verfahren zeigt sich nun darin, daß zum Zeitpunkt T0 eine dynamische Vorgabeverstärkung erfolgt, die entsprechend der anhand Figur 3 erläuterten Berechnungsvorschrift gebildet wird. Die dynamische Vorgabeverstärkung erhöht dabei die Wirkung des von der ASR-Einrichtung abgegebenen Vorgabewertes zur Reduzierung der Stellgliedposition bzw. der Motorleistung. Entsprechend dem erfindungsgemäßen Verfahren nach Figur 3 wird der durch die dynamische Vorgabeverstärkung korrigierte Vorgabewert in vorgegebenen Zeitintervallen (beispielsweise zu den Zeitpunkten T1 und T2), die die Zeit, die seit dem Auftreten der Schlupfneigung verstrichen ist, repräsentieren, um eine vorgegebenen, von dem momentanen Vorgabewert und dem Vorgabewert vor dem Zeitpunkt T0 sowie einem Zeitfaktor erhöht, bis der von der ASR-Einrichtung vorgegebene Wert erreicht ist. Der Zeitverlauf, der die Sollposition des Stellgliedes repräsentierenden Sollwert ist dabei bis zum Zeitpukt T0 durch die gestrichelte, zum Zeitpunkt T0 durch die strichpunktiert und die punktierte Linie gekennzeichnet, zwischen den Zeitpunkten T0 bis T2 durch die punktierte Linie, nach dem Zeitpunkt T2 durch die strichpunktierte Linie dargestellt.

Der Verlauf der Istposition des Stellgliedes ist anhand der durchgezogenen Linie beschrieben. Die Reaktionszeit auf eine Reduzierungsforderung (im MSR-Fall auf eine Erhöhungsforderung) der Betriebsmittelzufuhr wird dabei erheblich verbessert.

Zusammenfassend ist anzumerken, daß die dargestellte Vorgehensweise als schnell wirkende Vorsteuerung für die Stellgliedposition wirkt, wobei die Werte der zusätzlichen Verstärkung Vorsteuerwerten entsprechen.

## Patentansprüche

1. System zur elektronischen Steuerung und/oder Regelung der Leistung einer Brennkraftmaschine eines Kraftfahrzeugs,
- durch elektronische Steuerung eines elektrisch betätigbaren, die Leistung der Brennkraftmaschine (10) beeinflussenden Stellglieds (22),
- mit einer elektronischen Steuereinheit (27),
- mit Mitteln (56) zur Erfassung einer den Fahrerwunsch anzeigenden Größe,
- wobei die elektronische Steuereinheit (27) in Abhängigkeit der den Fahrerwunsch anzeigenden Größe (50) die Stellung des elektrisch betätigbaren Stellglieds (22) steuert,
- wobei die Steuereinheit (27) bei übermäßigem Schlupf an wenigstens einem Antriebsrad die Stellung des elektrisch betätigbaren Stellgliedes (22) unabhängig von der den Fahrerwunsch anzeigenden Größe (50) steuert,
- wobei bei Auftreten des übermäßigen Schlupfes der Steuereinheit (27) Werte (DKR/DKE) zugeführt werden, welche eine Reduzierung bzw. Erhöhung der Stellung des elektrisch betätigbaren Stellgliedes (22) und damit der Leistung der Brennkraftmaschine (10) bewirken,
- und die Steuereinheit (27) die Stellung des Stellgliedes (22) dann in Abhängigkeit dieser Werte steuert,
dadurch gekennzeichnet, daß
- zum Erreichen einer kürzeren Reaktionszeit des Stellgliedes (22) die Steuereinheit (27) diese Werte (DKR/DKE) zusätzlich in Richtung ihrer Wirkung auf die Stellung des Stellglieds (22) und damit auf die Leistung der Brennkraftmaschine (10) verstärkt,
- diese zusätzliche Verstärkung (DKRDYN/DKEDYN) der zugeführten Werte (DKR/DKE) mit dem Auftreten des übermäßigen Schlupfes erfolgt
- und diese Verstärkung während des durch den auftretenden übermäßigen Schlupf gekennzeichneten Betriebszustandes zurückgenommen wird.

2. System nach Anspruch 1, dadurch gekennzeichnet, daß das elektrisch betätigbare Stellglied (22) mittels einer Lageregelung (42) eingestellt wird, wobei die verstärkten Werte (DKR/DKE, DKRDYN/DKEDYN) auf den Sollwert (DKS) der Regelung geschaltet ist.

3. System nach einem der vorhergehenden Ansprüche, dadurch gekennzeichnet, daß die zusätzliche Verstärkung (DKRDYN/DKEDYN) der zugeführten Werte (DKR/DKE) in vorgegebenen Stufen zurtickgenommen wird.

4. System nach einem der vorhergehenden Ansprüche, dadurch gekennzeichnet, daß die zusätzliche Verstärkung (DKRDYN/DKEDYN) der zugeführten Werte (DKR/DKE) mit einer vorgegebenen Stufenhöhe zu vorgegebenen Zeitpunkten (T_{d1}/T_{d2}) zurückgenommen wird.

5. System nach einem der vorhergehenden Ansprüche, dadurch gekennzeichnet, daß die zusätzliche Verstärkung (DKRDYN/DKEDYN) abhängig vom Ausgangswert (DKRALT/DKEALT) des zugeführten Wertes vor Auftreten des übermäßigen Schlupfes, dem vorgegebenen Wert (DKR/DKE) bei Auftreten des übermäßigen Schlupfes und der seit Auftreten des übermäßigen Schlupfes verstrichenen Zeit ist.

6. System nach einem der vorhergehenden Ansprüche, dadurch gekennzeichnet, daß das Auftreten des übermäßigen Schlupfes aus einem Vergleich eines gespeicherten Wertes vor Auftreten des übermäßigen Schlupfes und dem momentanen Wert (DKR/DKE) erkannt wird.

7. System nach einem der vorhergehenden Ansprüche, dadurch gekennzeichnet, daß bei Auftreten des übermäßigen Schlupfes folgende Schritte durchgeführt werden:
- Bestimmung der zusätzliche Verstärkung (DKRDYN/DKEDYN) als Funktion des gespeicherten (DKRALT/DKEALT), des momentanen Wertes (DKR/DKE) sowie eines Zeitfaktors (T_{d1}),
- Bestimmung des Sollwertes (DKS) der Lageregelung aus dieser zusätzlichen Verstärkung (DKRDYN/DKEDYN) und dem momentanen Wert (DKR/DKE),
- Neubestimmung der zusätzliche Verstärkung (DKRDYN/DKEDYN) nach Ablauf eines vorgegebenen Zeitintervalls (T_{d1}) als Funktion des gespeicherten (DKRALT/DKEALT), des momentanen Werts (DKR/DKE) sowie eines Zeitfaktors (T_{d1}), der kleiner als der Zeitfaktor (T_{d2}) der Erstbestimmung ist,
- Bestimmung des Sollwertes (DKS) aus der neubestimmten Verstärkung (DKRDYN/DKEDYN),
- wiederholen dieser Schritte für eine vorgegebene Anzahl von Zeitintervallen,
- Festlegung des momentanen Wert (DKR/DKE) als Sollwert (DKS) nach Ablauf des letzten Zeitintervalls.

## Claims

1. System for the electronic control and/or control of the output of an internal combustion engine of a motor vehicle
- by means of electronically controlling an electrically operable servo component (22) which influences the output of the engine (10)
- with an electronic control unit (27),
- with means (56) for detecting a Variable which indicates the driver's wish,
- in which the electronic control unit (27), dependent on the variable (50) which Indicates the driver's wish, controls the position of the electrically operable servo component (22),
- in which, on the occurrence of excessive slip on at least one driving wheel, the control unit (27) controls the position of the electrically operable servo component (22) independently of the variable (50) which indicates the driver's wish,
- in which, on the occurence of excessive slip, the control unit (27) is fed values (DKR/DKE) which effect a reduction or an increase of the position of the electrically operable servo component (22) and thus the output of the engine (10),
- and the control unit (27) then controls the position of the servo component (22) dependent on these values,
characterised in that
- in order to achieve a shorter response time of the servo component (22), the control unit (27) additionally amplifies these values (DKR/DKE) in the direction of their effect on the position of the servo component (22) and thus on the output of the engine (10),
- this additional amplification DKRDYN/DKEDYN of the supplied values (DKR/DKE) takes place with the occurrence of the excessive slip
- and this amplification is taken off during the operating condition which is characterised by the occurring excessive slip.

2. System in accordance with claim 1, characterised in that the electrically operable servo component (22) is set by means of a positioning control (42), with the amplified values (DKR/DKE, DKRDYN/DKEDYN) switched to the set-point value (DKS) of the control.

3. System in accordance with one of the preceding claims, characterised in that the additional amplification (DKRDYN(DKEDYN) of the supplied values (DKR/DKE) is reduced in predetermined steps.

4. System in accordance with one of the preceding claims, characterised in that the additional amplification (DKRDYN/DKEDYN) of the supplied values (DKR/DKE) is reduced with a predetermined stage level at predetermined instants (T_{d1}/T_{d2}).

5. System in accordance with one of the preceding claims, characterised in that the additional amplification (DKRDYN/DKEDYN) is dependent on the initial value (DKRALT/DKEALT) of the supplied value prior to the occurrence of excessive slip, the specified value (DKR/DKE) which exists at the occurrence of excessive slip and on the time elapsed since the occurrence of excessive slip.

6. System in accordance with one of the preceding claims, characterised in that the occurrence of excessive slip is recognized from a comparison of a stored value, which represents the default value prior to the occurrence of excessive slip, and the momentary value (DKR/DKE).

7. System in accordance with one of the preceding claims, characterized in that with the occurrence of excessive slip, the following steps are carried out:
- determining the additional amplification (DKRDYN/DKEDYN) as a function of the stored value (DKRALT(DKEALT), the momentary value (DKR/DKE), and a time factor (T_{d1}),
- determining the set-point value (DKS) of the positioning control from this additional amplification (DKRDYN/DKEDYN) and the momentary value (DKR/DKE),
- determining anew the additional amplification (DKRDYN/DKEDYN) after the lapse of a predetermined interval (T_{d1}), as a function of the stored value (DKRALT/DKEALT), the momentary value (DKR/DKE), and of a time factor (T_{d1}) which is smaller than the time factor (T_{d2}) of the first determination,
- determining the set-point value (DKS) from the newly determined amplification (DKRDYN/DKEDYN),
- repeat of these steps for a predetermined number of intervals,
- fixing the momentary value (DKR/DKE) as set-point value after the lapse of the last interval.

## Revendications

1. Système pour la commande électronique et/ou de régulation de la puissance d'un moteur à combustion interne d'un véhicule automobile,
- par une commande électronique d'un organe de réglage (22) à manoeuvre électrique influençant la puissance du moteur à combustion interne (10),
- par une unité de commande électronique (27),
- par des moyens (56) pour détecter une grandeur indiquant le souhait du conducteur,
- l'unité de commande électronique (27) commandant la position de l'organe de réglage (22) manoeuvré électroniquement en fonction de la grandeur (50) indiquant le souhait du conducteur,
- l'unité de commande (27) commandant la position de l'organe de réglage (22) manoeuvré électriquement, indépendamment de la grandeur (50) indiquant le souhait du conducteur, lorsqu'au moins l'une des roues motrices patine de façon excessive,
- lorsque se produit le patinage excessif, l'unité de commande (27) reçoit des grandeurs (DKR/DKE) provoquant une réduction ou une augmentation de la position de l'organe de réglage (22) à manoeuvre électrique et ainsi la puissance fournie par le moteur à combustion interne (10),
- et l'unité de commande (27) définissant la position de l'organe de réglage (22) en fonction de ses valeurs,
caractérisé en ce que :
- pour obtenir un temps de réaction plus court pour l'organe de réglage (22), l'unité de commande (27) accentue ces valeurs (DKR/DKE) en plus, dans le sens de son action sur la position de l'organe de réglage (22) et ainsi sur la puissance du moteur à combustion interne (10),
- cette accentuation supplémentaire DKRDYN/DKEDYN des valeurs fournies (DKR/DKE), se fait lorsque se produit le patinage excessif,
- et cette accentuation est reprise pendant l'état de fonctionnement caractérisé par le patinage excessif.

2. Système selon la revendication 1, caractérisé en ce que l'organe de réglage à manoeuvre électrique (22) est réglé par une régulation de position (42) les valeurs accentuées (DKR/DKE, DKRDYN/DKEDYN) étant commutées sur la valeur de consigne (DKS) de la régulation .

3. Système selon l'une des revendications précédentes, caractérisé en ce que l'accentuation supplémentaire (DKRDYN/DKEDYN), des valeurs fournies (DKR/DKE) est reprise suivant des paliers prédéterminés.

4. Système selon l'une des revendications précédentes, caractérisé en ce que l'accentuation supplémentaire (DKRDYN/DKEDYN) des valeurs fournies (DKR/DKE) étant reprise avec des amplitudes de palier, prédéterminées à des instants prédéterminés (T_{d1}/T_{d2})..

5. Système selon l'une des revendications précédentes, caractérisé en ce que l'accentuation supplémentaire (DKRDYN/DKEDYN) dépend de la valeur de départ (DKRALT/DKEALT) de la valeur fournie avant que ne se produise le patinage excessif, de la valeur prédéterminée (DKR/DKE) lorsque se produit le patinage excessif et du temps écoulé depuis que s'est produit le patinage excessif.

6. Système selon l'une des revendications précédentes, caractérisé en ce qu'on détecte la production du patinage excessif par la comparaison d'une grandeur mise en mémoire avant que se soit produit le patinage excessif et la valeur instantanée (DKR/DKE).

7. Système selon l'une des revendications précédentes, caractérisé en ce qu'on exécute les étapes suivantes lorsque se produit le patinage excessif :
- on détermine l'accentuation supplémentaire (DKRDYN/DKEDYN) en fonction de la valeur enregistrée (DKRALT/DKEALT), de la valeur instantanée (DKR/DKE), ainsi qu'un facteur de temps (T_{d1}),
- on détermine la valeur de consigne (DKS) de la régulation de position à partir de cette accentuation supplémentaire (DKRDYN/DKEDYN) et de la valeur instantanée (DKR/DKE),
- on détermine de nouveau l'accentuation supplémentaire (DKRDYN/DKEDYN), après qu'un intervalle de temps prédéterminé (T_{d1}) se soit écoulé, en fonction de la valeur enregistrée (DKRALT/DKEALT), de la valeur instantanée (DKR/DKE) ainsi que d'un facteur de temps (T_{d1}) inférieur au facteur de temps (T_{d2}) de la première détermination ,
- on détermine la valeur de consigne (DKS) à partir de l'accentuation nouvellement définie (DKRDYN/DKEDYN),
- on répète ces étapes pour un nombre prédéterminé d'intervalles de temps,
- on fixe la valeur instantanée (DKR/DKE) comme valeur de consigne (DKS) après la fin du dernier intervalle de temps.
